# EUROPEAN PATENT SPECIFICATION

(11) **EP 1 926 256 B1**
(45) Date of publication and mention of the grant of the patent: **04.03.2009**
(21) Application number: 06291800.8
(22) Date of filing: 22.11.2006
(51) Int. Cl.: H04L 12/56

(54) **Method of time aligning the members of a virtual concatenated group in a synchronous transmission system**
Verfahren zum zeitlichen Anordnen von Teilnehmern einer virtuellen zusammengesetzten Gruppe in einem synchronen Übertragungssystem
Procédé d'alignement dans le temps d'abonnés d'une groupe virtuelle concatenée dans un système de transmission synchrone

(43) Date of publication of application: 28.05.2008
(73) Proprietor: Alcatel Lucent, 75008 Paris (FR)
(72) Inventor: Magna detto Calcaterra, Marcello, 20047 Brugherio (Milano) (IT); Razzetti, Luca, 20099 Sesto S. Giovanni (Milano) (IT); Massimo, Marchese, 20047 Partinico (Pa) (IT); Menaldo, Cristiano, 35132 Padova (IT)
(74) Representative: Menzietti, Domenico

(56) References cited:
- US-A1- 2002 141 340
- US-A1- 2005 071 594
- US-A1- 2006 187 715

## Description

### FIELD OF THE INVENTION

The present invention relates to a method of time aligning the members of a virtual concatenated group in a synchronous transmission system, to a device adapted to perform the method and to a network element including the device.

### BACKGROUND OF THE INVENTION

Three synchronous transmission systems are known, widespread and standardised nowadays: SDH, SONET and OTN.

These systems provide to transfer information through virtual containers; in the case of SDH, for example, higher order virtual containers are called VC-4 (150.336 Mbit/s) and VC-3 (48.960 Mbit/s) and lower order are called VC-2 (6.912 Mbit/s) and VC-11 (2.304 Mbit/s) and VC-12 (1.728 Mbit/s).

In these systems, a hierarchy of frame structures is defined to carry virtual containers; in the case of SDH, for example, there are defined STM-1 (155.52 Mbit/s), STM-4 (622.08 Mbit/s), STM-16 (2488.32 Mbit/s), STM-64 (9953.28 Mbit/s), STM-256 (39812.12 Mbit/s).

Traditional SDH/SONET (SDH=Synchronous Digital Hierarchy, SONET= Synchronous Optical NETwork) networks use a pre-defined hierarchy of synchronous payloads, as defined in ITU-T G.707 (12/2003). Originally, this hierarchical structure enabled easy aggregation of lower rate streams carrying voice traffic. For the transport of payloads that exceed the payload capacity of the standard set of Virtual Containers (VC-3/VC-4/VC-2/VC-12/VC-11 for SDH), VC concatenation was defined. Two types of concatenations were defined: contiguous and virtual concatenation. Contiguous concatenation has been part of SDH/SONET from its early days. It was conceived to accommodate high-speed data applications that use protocols such as ATM, Packet-over-SONET (PoS) and others that require high-bandwidth mappings over SDH/SONET. To enable this, multiple VCs are transported (and switched) across the SDH/SONET network as a single connection with the first SDH/SONET container payload pointer set in normal mode, and the subsequent payload pointers set to concatenation mode, thus linking all the units together.

One POH (Path Overhead) is used for the whole VC-4-Xc and it is located in the first column of the VC-4-Xc, while columns 2 to X are fixed stuff. The concatenation functionality is required at each network element and not only at the end points of the path termination. For the SDH hierarchy, contiguous concatenation of X VC-4 (with X=4, 16, 64, 256) is defined at high-order for high-speed data services and of X VC2 (with X=1...7) at low-order for low-speed services. For high-order the contiguously concatenated VC-4-Xc and corresponding payload rates are:
- VC-4-4c: 599.040 Mbps
- VC-4-16c: 2.396.160 Mbps
- VC-4-64c: 9.584.640 Mbps
- VC-4-256c: 38.338.560 Mbps

For low-order the VC2-Xc, with value of X between 1 and 7, provides payload rates between 6.784 Kbps and 47.488 Kbps in steps of 6.784 Kbps.

Although contiguous concatenation has been successfully introduced and deployed for years, it posed some major deficiencies:
- contiguous concatenation doesn't address one of the main limitations of traditional SDH/SONET networks, that is the coupling between path establishment and physical resource reservation. In other words, with traditional SDH/SONET networks, even when physically available SDH/SONET paths exist, they may not be usable because of the non-contiguous concatenation nature of the available containers;
- some of the legacy SDH/SONET equipments may not support contiguous concatenation transport switching at higher rates such as VC-4-64c and VC-4-256c in some regions;
- some applications may require finer granularity of payloads than contiguous concatenation can offer.

To address these limitations, Virtual Concatenation has been defined for SDH and SONET in ITU-T G.707 (12/2003) and for OTN in ITU-T G.709 (03/2003). Virtual Concatenation defines a procedure whereby the contiguous bandwidth is divided into equal parts at the transmitting side and logically represents them in a Virtual Concatenation Group (VCG). A VCG is so composed of members; in SDH, the members are the VCs (Virtual Containers), wherein each VC has its own POH, in Sonet the members are the Virtual Tributaries and in OTN the members are the Optical channels Data Units. The VCG members are transported as individual members across the SDH network over diverse routes and recombined at the far end destination VCG receiver. More than one VCG can be defined from a transmitting to a receiving side and each VCG can comprise a different number of members. For the SDH hierarchy, virtual concatenation of X VC3/4s (X=1...256) is defined for high-order and of X VC11/12/2 (X=1..64) for low-order. Because of different propagation delay associated with individual member in the VCG, a sequencing scheme has been developed to help identify the differential delay and the associated alignment process. Intermediate network elements do not perform path termination for these connections, and therefore, do not need to be virtual concatenation aware. High-order VCs (55 Mbps and 155 Mbps) are grouped when transporting high-speed data services such as Gigabit Ethernet and Fiber Channel; low-order VCs (1,5 Mbps, 2 Mbps and 6,3 Mbps) are used for low-speed data services such as 10 Mbps and 100 Mbps Ethernet. The H4 byte contained in the POH [Path OverHead] of the VCs is used for the virtual concatenation multiframe indication, often called simply MFI.

The Link Capacity Adjustment Scheme (LCAS), as defined in ITU-T G.7042/Y.1305 (08/2003), is a complementary protocol to Virtual Concatenation and can be used both for SDH/SONET and OTN networks. It works unidirectionally, enabling carriers to provide asymmetric bandwitdth, i.e. the bandwidth of a forward direction can be different from the bandwidth of the return direction. LCAS allows hitless adjustment of the size of a virtual concatenated group of members. LCAS takes care of the synchronization between the sender and receiver so that the size of a virtual concatenated group can be increased or decreased in response to a change in service bandwidth requirement in a manner that does not corrupt or interfere with the data signal. Moreover the size can be temporarily decreased in response to a fault condition in an existing member: since the members of a VCG don't need to use the same physical links of the network (path diversity), some of its members could experience a failed link along their path while the remaining members do not. Only the affected members of the VCG are removed: the user's bandwidth is temporarily reduced, so the service is up and running at a degraded level, but it is not interrupted. The removed member is added in a hitless way when the failure has been removed. LCAS operates at the end points of the connection only and so to deploy LCAS only new tributary cards are required, without requiring hardware upgrades to network elements throughout the entire network. All the above is known.

The members of a Virtual Concatenated Group are transmitted from the transmission side, are transported as individual virtual containers across the transport network over different routes, and are recombined at the reception side; therefore, each virtual containers experience a different propagation delay across the network.

This means that a time alignment is necessary at the reception side, more specifically at the termination side, at least for the members of a Virtual Concatenated Group.

At present the above problem is solved through circuits requiring large buffers and/or introducing huge delays at the reception or termination side.

For example US 2006/0187715 A1 describes an aligner for a Virtual Concatenation Group (VCG), where the members of the VCG are written into a multi-channel memory. The members are then aligned in the memory and in a further step the sequence of the members is reordered. A read manager reads the members of the VCG out when these are complete and aligned in the multi-channel memory.

### SUMMARY OF THE INVENTION

It is the object of the present invention to provide a solution to the above problem, in particular a method of time aligning the members of a virtual concatenated group in a synchronous transmission system that can be implemented through a relatively small buffer and through a circuitry that introduces a relatively small delay at the reception or termination side. This object is particularly felt for Virtual Concatenated Groups in SDH or SONET or OTN networks.

The above object is achieved through the method having the features set out in the attached claim 1; further advantageous features of the method are set out in the dependent claims.

According to another aspect, the present invention also relates to a device adapted to implement this method and to a network element including the device.

The basic idea behind the present invention is to provide some memory means for storing information of members of a virtual concatenated group, to receive information of the members of the virtual concatenated group, to store the received information of the members of the virtual concatenated group into the memory means when they are received, and to read from the memory means the information of the members of the virtual concatenated group corresponding to the same time unit at the transmission side according to the order, after that a period of time has elapsed since the reception of the most delayed member of the virtual concatenated group corresponding to the same time unit.

Preferably, the period of time is controlled by an address difference between actual write address into memory means of information relating to the most delayed member and actual read address from the memory means of information relating to the most delayed member.

In this way, a relatively small buffer may be used and a relatively small delay is introduced at the reception or termination side.

Advantageously, the most delayed member of the virtual concatenated group is determined; preferably, this is done repeatedly or periodically.
In this way, any variation in the propagation delay of any or all members of the virtual concatenated group (across the network) can be fully and easily compensated including those caused by the adjustment of the size of the virtual concatenated group according to the LCAS protocol.

### BRIEF DESCRIPTION OF THE DRAWINGS

The present invention will become more apparent from the following description to be considered in conjunction with the annexed drawing in which:
Fig.1 shows a simplified telecommunications network where the present invention can be applied,
Fig.2 shows schematically a short time section of an Ethernet data flow encapsulated by a GFP frame (not shown),
Fig.3 shows schematically and partially the information content of four different virtual containers that are virtual concatenated,
Fig.4 shows schematically and partially the content of a buffer as it develops in time while using an embodiment of the method according to the present invention, and
Fig.5 shows schematically a circular buffer and its storage areas at a certain time when using the method according to the present invention.

It is to be understood that the following description and the annexed drawings are not to be interpreted as limitations of the present invention but simply as exemplifications.

### BEST MODE FOR CARRYING OUT THE INVENTION

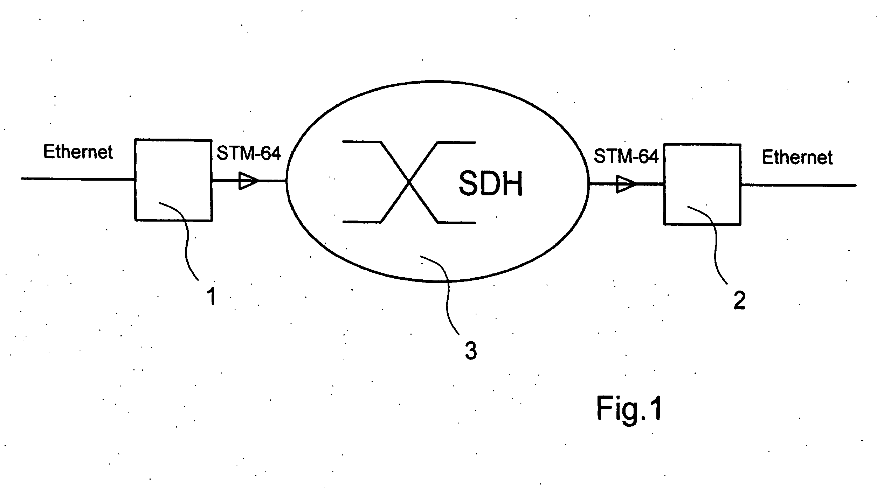

The telecommunications network of Fig. 1 comprises a first network element 1 and a second network element 2, both connected to a telecommunication network 3 for synchronous transmission of information, in particular an SDH network.
For the purpose of the present description, it is considered only that network element 1 transmits over network 3 a STM-64 data flow (about 10Gbit/s = about 1.25Gbyte/s) carrying sixty-four virtual containers VC-4 (about 150Mbit/s = about 19Mbyte/s) and that network element 2 receives from network 3 a STM-64 data flow carrying the sixty-four virtual containers VC-4 transmitted by network element 1.

Network element 1 and network element 2 receive a number of Gigabit Ethernet data flows but, for the purpose of the present description, it is considered only that one of the Ethernet data flow received by network element I has to be transferred to network element 2 through one virtual concatenated group in the SDH network 3; therefore, for this communication, network element 1 can be considered the transmission side and network element 2 can be considered the reception side and termination side.

In order to transport an Ethernet data flow across an SDH network, an intermediate adaptation layer can used between the Ethernet level and the SDH level; in this embodiment of the present invention, GFP [Generic Framing Procedure, defined in ITU-T G.7041/Y.1303, Dec.,2001] is used for mapping the client signals over the transport network. It is to be clarified that, in general, the present invention is useful when transferring client data over a synchronous transmission network (e.g. SDH, SONET, OTN), wherein the client data can be layer-2/layer-3 data packets (e.g. Ethernet, IP, MPLS); in order to do that, an intermediate adaptation layer can be used, like for example GFP, POS, PPP, HDLC. Therefore, in the following it is has to be considered that this adaptation layer is present and used even if not always explicitly mentioned.

Additionally, it has been established that the maximum data transfer rate necessary for carrying this Ethernet data flow in the SDH network is about 600 Mbit/s; therefore, four VC-4 virtual containers within a STM-64 frame are sufficient for such data transfer (including the GFP mapping overheads).

The data words, i.e. the bytes, of the GFP frames encapsulating the bytes of this Ethernet data flow are distributed in the same time unit among four virtual containers of this STM-64 data flow in an order at the transmission side. For example, they can be cyclically distributed in the following order: VC-4 number 3 (indicated hereinafter with VC-4(#3) ), VC-4 number 4 (indicated hereinafter with VC-4(#4) ), VC-4 number 11 (indicated hereinafter with VC-4(#11) ), VC-4 number 17 (indicated hereinafter with VC-4(#17) ). In the following, it is assumed that these virtual containers constitute a VCG.

As it is known, the virtual containers of a VCG are transmitted from the transmission side, are transported as individual virtual containers across a SDH network over different routes, and are recombined at the reception side; therefore, each virtual containers experience a different propagation delay across the network.

This means that, even if four consecutive data words, i.e. four consecutive bytes, from this Ethernet data flow are transmitted at the same time unit, over four different and virtually concatenated virtual containers, they may be received at different time units, with different delays corresponding to the four propagation delays across the transport network of the four virtual containers of the virtual concatenated group.

In order to reconstruct correctly at the reception side the Ethernet data flow transmitted at the transmission side, the virtual containers of the virtual concatenated group must be time aligned, that is the same order of transmission of the virtual containers of the virtual concatenated group must be recovered at the reception side..

At a certain time, network element 2 receives the four virtual containers with different delays; for example, VC-4(#17) is the first to be received and is in advance with respect to VC-4(#11), VC-4(#11) is in advance with respect to VC-4(#3), VC-4(#3) is in advance with respect to VC-4(#4), VC-4(#4) is the most delayed virtual container of the virtual concatenated group. The situation may be different after some time (e.g. one hour or one day).

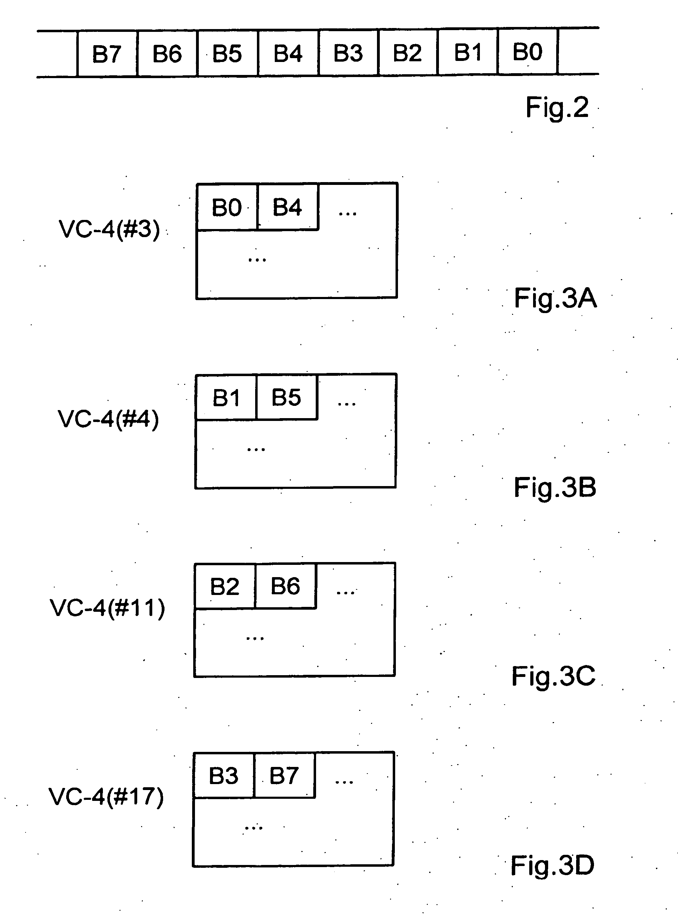

In Fig.2, only eight consecutive bytes, B0 B1 B2 B3 B4 B5 B6 B7, of the Ethernet data flow received by network element 1 is shown; B0 is the first byte of this short sequence received by network element 1 and B7 is the last byte of this short sequence received by network element 1. At the transmission side, i.e. within network element 1, the various virtual containers VC-4 for the outgoing STM-64 dataflow are prepared.

Within network element 1, the bytes of the Ethernet data flow are first inserted into the payloads of GFP frames.

Considering the above conditions and only one VCG, the first bytes of the payload of VC-4 (#3) are B0 and then B4, as it is shown in Fig.3A, the first bytes of the payload of VC-4 (#4) are B1 and then B5, as it is shown in Fig.3B, the first bytes of the payload of VC-4 (#11) are B2 and then B6, as it is shown in Fig.3C, the first bytes of the payload of VC-4 (#17) are B3 and then B7, as it is shown in Fig.3D. In this example, for the sake of simplicity and clarity, we have neglected the bytes corresponding to the headers of the GFP frames.

The members of this VCG are transmitted together by network element 1, are transported as individual virtual containers across network 3 over different routes, and are recombined by network element 2.

For receiving and aligning the virtual containers of this VCG according to the present invention, at least one buffer is necessary at the reception side, i.e. within network element 2.

Network element 2 is able to align the virtual containers of the VCG thanks to the MFI [MultiFrame Indicator] inserted in each virtual container of the VCG. To be precise, network element 2 is able to determine the difference in the propagation delay across the network of the various virtual containers of the VCG thanks to the MFI and to compensate this delay by means of the buffer, like it will be explained more in detail.

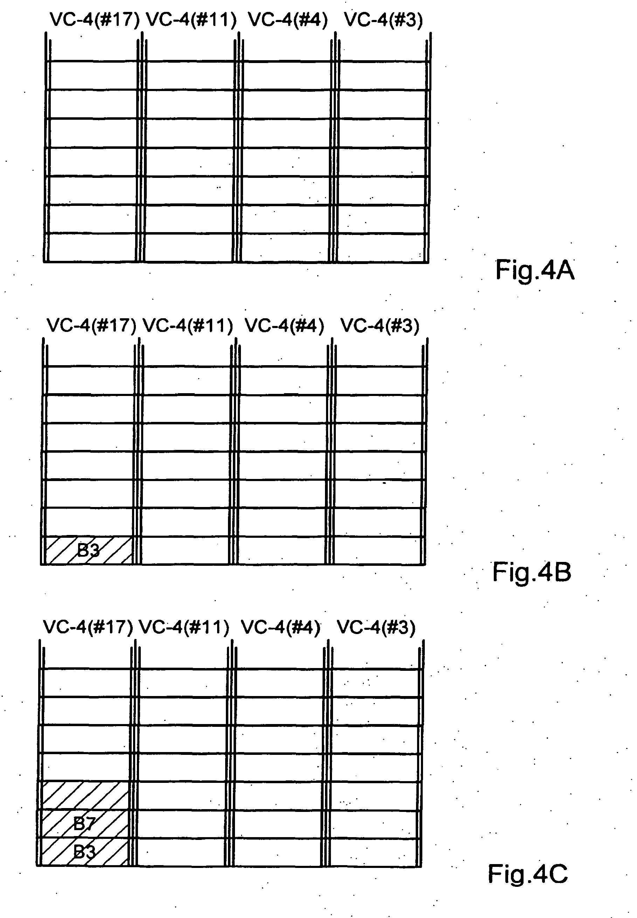

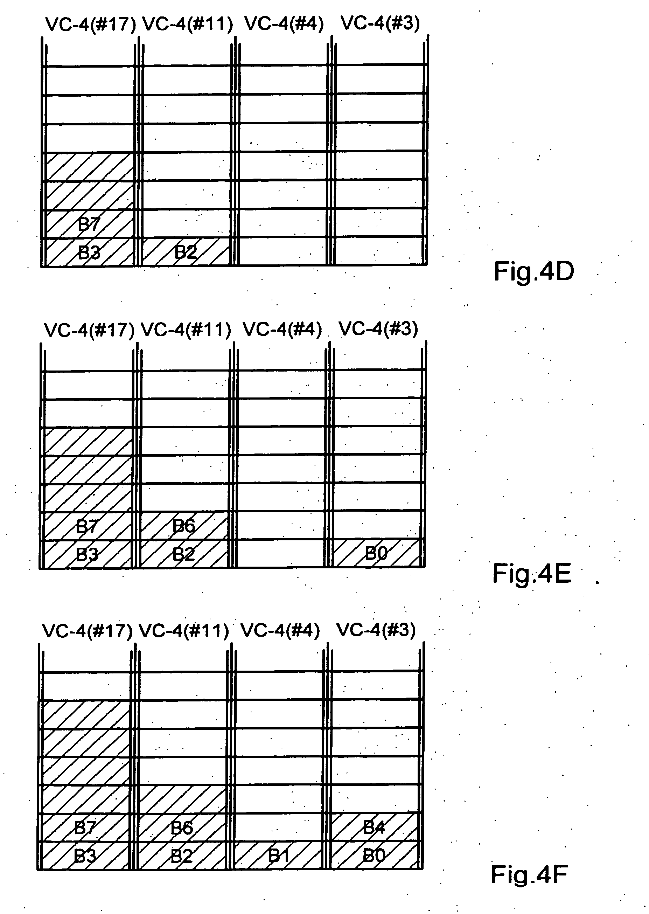

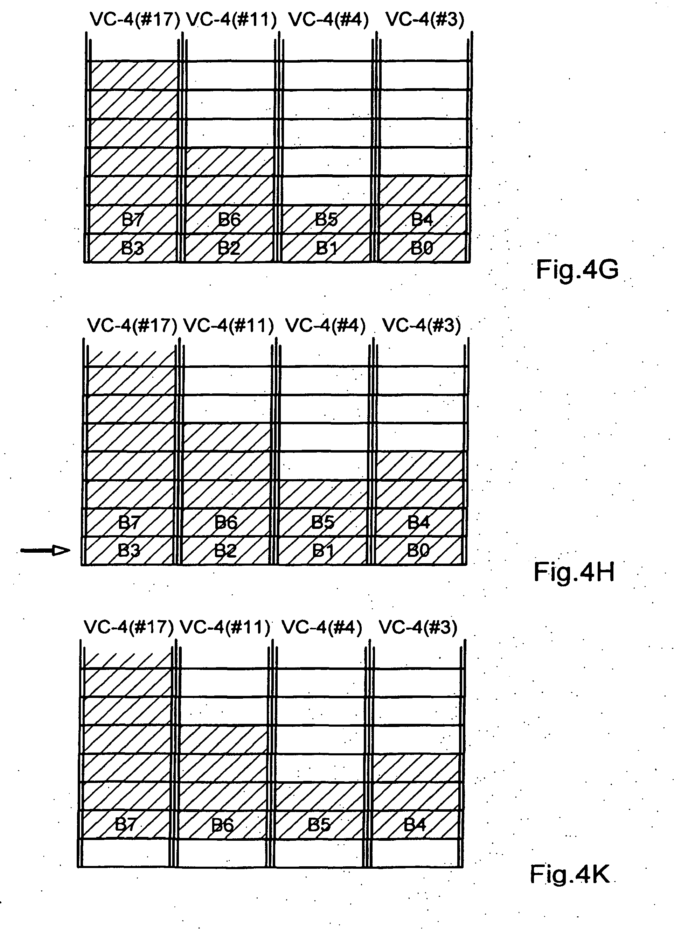

Fig.4 shows schematically and partially the content of this buffer as it develops in time while using an embodiment of the method according to the present invention.

It to be noted that this buffer is split into four sub-buffers (which may be implemented as different portions of a single memory or as individual memories), one for each virtual containers of this VCG.

Additionally, it is to be noted that these four sub-buffers are shown one beside the other for a better understanding of the present invention; anyway, in case of a single memory, they are typically located in different portions of the same memory device.

Finally, it is to be noted that each of the memory cells of the buffer in Fig.4 correspond to one byte; anyway, the memory cells of the buffer used for the present invention may store a higher number of bytes, for example thirty-two.

At the beginning, the buffer is empty, as it is shown in Fig.4A.

At a certain time, one byte is received by network element 2 from network 3 relating to this VCG.

According to the assumption made above, network element 2 receives the first byte of VC-4(#17), i.e. byte B3; this byte is stored in the first cell of the appropriate sub-buffer of the buffer, as shown in Fig.4B.

Afterwards, network element 2 receives the second byte of VC-4(#17), i.e. byte B7, and the third byte of VC-4(#17); these byte are stored in the following cells of the appropriate sub-buffer of the buffer, as shown in Fig.4C.

Afterwards, network element 2 receives the first byte of VC-4(#11), i.e. byte B2, and the fourth byte of VC-4(#17); these byte are stored in the appropriate cells of the appropriate sub-buffers of the buffer, as shown in Fig.4D. In this case there is a delay corresponding to three bytes between VC-4(#17) and VC-4(#11).

Afterwards, network element 2 receives the first byte of VC-4(#3), i.e. byte B0, and the second byte of VC-4(#11), i.e. byte B6, and the fifth byte of VC-4(#17); these byte are stored in the appropriate cells of the appropriate sub-buffers of the buffer, as shown in Fig.4E. In this case there is a delay corresponding to one byte between VC-4(#11) and VC-4(#3) and a delay corresponding to four bytes between VC-4(#17) and VC-4(#3).

Afterwards, network element 2 receives the first byte of VC-4(#4), i.e. byte B1, and the second byte of VC-4(#3), i.e. byte B4, and the third byte of VC-4(#11) and the sixth byte of VC-4(#17); these byte are stored in the appropriate cells of the appropriate sub-buffers of the buffer, as shown in Fig.4F. In this case there is a delay corresponding to one byte between VC-4(#3) and VC-4(#4) and a delay corresponding to two bytes between VC-4(#11) and VC-4(#4) and a delay corresponding to five bytes between VC-4(#17) and VC-4(#4).

Afterwards, network element 2 receives the second byte of VC-4(#4), i.e. byte B5, and the third byte of VC-4(#3) and the fourth byte of VC-4(#11) and the seventh byte of VC-4(#17); these byte are stored in the appropriate cells of the appropriate sub-buffers of the buffer, as shown in Fig.4G.

Afterwards, network element 2 receives the third byte of VC-4(#4) and the fourth byte of VC-4(#3) and the fifth byte of VC-**4(#11) and the eighth byte of VC-4(#17); these byte are stored in** the appropriate cells of the appropriate sub-buffers of the buffer, as shown in Fig.4H.

At the time corresponding to Fig.4F, a sequence of the first four bytes of the original Ethernet data flow (plus neglected GFP overheads bytes) is available at the reception side, i.e. within the buffer of network element 2.

At the time corresponding to Fig.4G, a sequence of the first eight bytes of the original Ethernet data flow (plus neglected GFP overheads bytes) is available at the reception side, i.e. within the buffer of network element 2.

At the time corresponding to Fig.4H, a sequence of the first twelve bytes of the original Ethernet data flow (plus neglected GFP overheads bytes) is available at the reception side, i.e. within the buffer of network element 2.

According to this embodiment of the present invention, the first read from the buffer is carried out at the time corresponding to Fig.4H; only the first four bytes are read according to the same order used at the transmission side, i.e VC-4(#3) then VC-4(#4) then VC-4(#11) then VC-4(#17).

According to Fig.4H, the data to be read are stored in a row of the buffer; if the sub-buffers corresponding to the VCs of the VCG are realized as individual memories, the read addresses of the first four bytes (B0, B1, B2, B3) may be identical, while if the sub-buffers corresponding to the VCs of the VCG are different portions of the same memory, their read addresses are different but they may share the same address offset. The same applies for the read addresses of the second four bytes (B4, B5, B6, B7) and of the subsequent bytes.

For example, 1024 bytes are stored for each VC-4 of a virtual concatenated group including 64 VC-4. The total number of stored bytes is 1024 × 64 = 65536, which is equal to 2¹⁶: therefore the read address is composed of 16 bits, wherein 6 bits are used for identifying the number of the VC-4 (and thus they are different for each VC-4) and 10 bits are the same for all VC-4 (64) of the virtual concatenated group.

Therefore hereinafter the read addresses for the data of the virtual concatenated group are the same means that the read addresses are identical if the sub-buffers are realized as individual memories, while it means that the read addresses have a part of the bits identical if the sub-buffers are different portions of the same memory.

The result of this read is shown in Fig.4K; the first memory cells of each of the four sub-buffers are shown as empty, meaning that the data contained in these cells may be deleted or simply considered as invalid

As it can be understood from this simple embodiment (much simplified with respect to a real network element), time alignment at the reception side is achieved. Actually, in the present example, time alignment is carried out at the termination side; in this way, this activity is carried out only once which is the minimum necessity. The internal delay, which is a read delay, introduced by network element 2 for time alignment is much limited (only two bytes in this example).

It is to be noted that a first read could have been carried out at the time corresponding to Fig.4F thus introducing almost no internal delay for time alignment. Anyway, as the propagation delays experienced by the various virtual containers across network 3 may change, in particular they may increase, some spare storage is advantageous in order to avoid to read invalid data from the buffer.

A set of data is read from the buffer only when it is sure that the data corresponding to the most delayed virtual container are received and stored into the buffer; as said, a safety read delay is useful. For an SDH network, this determination can be carried out thanks to the MFI [MultiFrame Indicator] inserted in each virtual container of the VCG.

The shorter is the safety read delay, the maximum can the storage size of the buffer be reduced, which is particularly important for network elements receiving very high rates dataflow.

Now it is clear that without the basic teaching of the present invention, enormous buffers must be used.

It is to be noted that some protocols, such as e.g. Ethernet, are sensitive to the delay; in other words, the longer the delay and the lower the throughput. Through the teaching of the present invention the delay introduced by the reception/termination network element is much reduced while the delay introduced by the transport network remains the same.

Advantageously, in order to achieve a minimum delay and a minimum storage space, the most delayed virtual container of the virtual concatenated group is determined, for example repeatedly or even periodically; the highest repetition rate could be once every STM frame received.

As it will be better explained in the following, the safety read delay is set to a defined value (in the above example, a two bytes delay) and network element 2 tries to keep this read delay substantially constant.

In the example of Fig.4, information of the virtual concatenated group corresponding to a same time unit (at the transmission side) is read from the buffer according to the order of the virtual concatenated group VCG after some time from reception (at the reception side); in particular, the set of bytes of the VCG to be read from the buffer corresponds to the set containing a byte of the most delayed virtual container VC-4(#4, which is two bytes distant (i.e. two bytes displacement or two bytes delay) from the byte of the most delayed virtual container VC-4(#4) that is actually written into the buffer.

In the example of Fig.4H, if the reception delay of virtual container VC-4(#4) would be one byte, at the time corresponding to Fig.4H, only two bytes of virtual container VC-4(#4) would be present in the buffer; therefore the read address (or reading pointer) and the write address (or writing pointer) for virtual container VC-4(#4) would differ of one byte only.

Preferably, this address difference between the actual write address of the most delayed virtual container and the actual read address of the most delayed virtual container (that conceptually corresponds to the read address of all virtual containers) can be used to control a period of time after which the information of the virtual containers of the virtual concatenated group is read from the buffer, wherein the virtual concatenated group corresponds to the same time unit at the transmission side according to the defined order. This period of time allows to maintain the safety read delay and therefore a safe operation regarding time alignment at the reception side.

Preferably, if this address difference is greater than a defined value, the speed of reading data from the buffer is increased, while if this address difference is smaller than the defined value, the speed of reading data from the buffer is decreased; the value can be defined in advance (in the above example, the value is set to two, because the read delay is two bytes).

In the above example, the reading speed is increased/decreased by increasing/decreasing data read from the buffer during a certain time period.

Preferably, the speed is controlled so that to maintain the period of time (that is, the read delay) substantially constant.

Preferably, the most delayed member of the virtual concatenated group is determined at the reception side. For example, address differences between the actual write addresses and the actual read addresses of all the virtual containers of the virtual concatenated group can be computed; it is to be noted that the minimum of these address differences corresponds to the most delayed virtual container.

The control can therefore be carried out on this computed minimum address difference. This is an easy way to carry out the control and can advantgeously take into account that the delays of the virtual containers may change and that the most delayed virtual container may change.

Preferably, the determination of the most delayed member of the virtual concatenated group is carried out repeatedly or periodically.

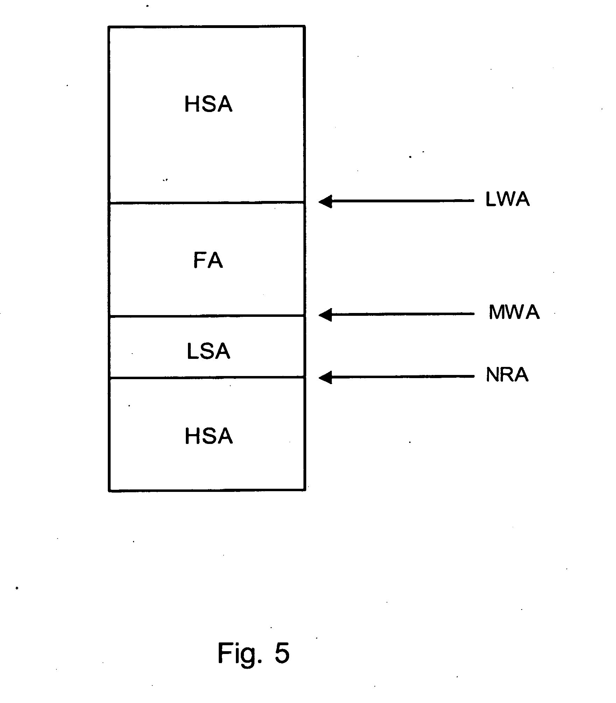

Fig.5 schematically shows a circular buffer and its storage areas at a certain time when using the method according to the present invention.

Fig. 5 shows:
- an arrow indicated with MWA (Most delayed Write Address), which is a pointer to the actual write address of the byte of the most delayed VC-4 (in the example of Fig.4H, MWA is the pointer to the address of the byte of VC-4(#4) stored on the top, that is stored one position above B5);
- an arrow indicated with NRA (Nominal Read Address), which is a pointer to an address equal to a defined number of positions below MWA (if this number is equal to two positons, in the example of Fig.4H NRA is the pointer to the address of byte B1 of VC-4(#4) );
- an arrow indicated with LWA (Least delayed Write Address), which is a pointer to actual write address of the byte of the least delayed VC-4 (in the example of Fig.4H, LWA is the pointer to the address of the byte on the top of VC-4(#17) ).

The above pointers define 3 areas in the buffer:
- a Low Speed Area (indicated with LSA in Fig.5), comprised between NRA and MWA;
- a Forbidden Area (indicated with FA in Fig.5), comprised between MWA e LWA;
- an High Speed Area (indicated with HSA in Fig.5), comprised between LWA and NRA.

Referring to the HSA, the buffer is circular: when a byte received from a VC-4 is written into the position of the top of the sub-buffer corresponding to this VC-4, the subsequent byte received from the same VC-4 is written into the position on the bottom of the same sub-buffer. Therefore we can consider to have area HSA extending from address identified by LWA till the top of the buffer and extending from the bottom of the buffer till address identified by NRA.

More specifically, the three areas shown in Fig.5 can be achieved according to the following steps. Starting from Fig. 4H, the buffer has stored the received bytes, while no read from the buffer has been performed. Further bytes are received and stored in the buffer (and again no read is performed) and thus the buffer of Fig. 4H will include further bytes.

The Most delayed Write Address MWA is a pointer to the byte on the top of sub-buffer VC-4 (#4). For example, we can consider that each sub-buffer of Fig. 4H further stores three bytes: in this example, MWA is a pointer to the byte of VC-4 (#4) which is four positions above byte B5 of Fig. 4H.

The Nominal Read Address NRA is a pointer to a byte of sub-buffer VC-4 (#4), wherein this byte is a defined number of positions under the byte on the top of sub-buffer VC-4 (#4), that is NRA is a defined number of positions under MWA. In this example, the defined number is set to two (equal to the safety read delay explained above) and thus NRA is two positions under MWA (that is, NRA is a pointer to two bytes above B5 of Fig. 4H).

The Least delayed Write Address LWA is a pointer to the byte on the top of sub-buffer VC-4 (#17). In this example, LWA is a pointer to the byte which is three positions above the byte on the top of sub-buffer VC-4 #17 of Fig.4H (in this case a larger buffer is considered, that is the top of the buffer is higher).

Therefore, HSA includes bytes B0, B1, B2, B3, B4, B5, B6, B7, the LSA includes the bytes stored at the addresses comprised between NRA and MWA, FA includes the bytes stored at the addresses comprised between MWA and LWA.

The method according to the invention performs the following steps:
- if the actual read address is in the High Speed Area HSA, the read speed is increased;
- if the current read address is in the Low Speed Area LSA, the read speed is decreased, because ;
- if the current read address is in the Forbidden Area FA, the read should be stopped.

When the actual read address is in the High Speed Area HSA, the read speed is increased because information is stored in the HSA since a long time and thus the delay at the reception can be too high.

When the current read address is in the Low Speed Area LSA, the delay at the reception is low because the information is stored since a short time, but the read speed is decreased because a safety read delay is required, in order to avoid to read information corresponding to the same time unit when it is not received the information from all the virtual containers.

When the current read address is in the Forbidden Area FA, that is when in Fig. 5 the actual read address is greater than the actual write address MWA of the information relating to the most delayed virtual container, the read is stopped, because information corresponding to the same time unit has not yet been received from all the virtual containers VC-4 of the same virtual concatenated group.

The current read address can be in the Forbidden Area FA in the following examples:
- in case one member of the virtual concatenated group is affected by a high delay (compared to the other members);
- in case of adding a new member to the virtual concatenated group according to the LCAS protocol, wherein the new member is affected by a high delay (compared to the other members);
- at the startup, that is when the first bytes of the virtual containers of the virtual concatenated group are received.

In both cases, the actual write address of the most delayed virtual container can be under the address of the last read virtual container: the read is temporarily stopped, in order to receive and store further bytes till the actual write address of the most delayed virtual container is above the last read address (above a number of positions equal to the defined value) and only at this time the read can be performed.

Therefore the reception of the data flow is temporarily interrupted, but reception of invalid data flow is avoided.

In this embodiment of the present invention, the data read from the buffer are used for generating a SDH-like first internal dataflow based on STM-like frame internally to network element 2. This SDH-like dataflow is sent to a first circuit (internal to network element 2) adapted to generate an outgoing second internal dataflow based on GFP frame that is sent to a second circuit (internal to network element 2) adapted to demultiplex it for the mentioned Gigabit Ethernet data flows.

As the above mentioned first dataflow is internal to network element 2, it is advantageously very similar to a standard SDH dataflow but it may provides differences with respect to the standard specification.

One difference that is related to the present invention is the size of the payload of the virtual containers of the STM-1 frame.

According to the specification, the standard payload is 2340 bytes; payloads of either 2337 bytes or 2343 bytes may be transmitted but only every third frame.

In network element 2, the standard payload is 2340 bytes; payloads of either 2339 bytes or 2341 bytes may be transmitted. This feature is used for allowing the variation of the speed of reading data from the buffer. As the difference in the payload is of one byte only, the above mentioned second circuit experience very smooth variations of the incoming data flow rate.

The method according to the invention takes into account only the steps that involve a single virtual concatenated group, but these steps can also be carried out for many virtual concatenated groups at the same time.

The memory means may comprise one buffer only (i.e. a single electronic circuit that may have one or more read and/or write ports) that is used for all the members of a virtual concatenated group; in this case the buffer is typically suitably organized (from the addressing point of view) in sub-buffers. The buffer is in particular of the circular type in order to use efficiently its memory cells; it is clear that from the hardware point of view the memory is linear and the circular feature is obtain through an appropriate addressing provided by a piece of software.

This same buffer could be used for all virtual concatenated groups dealt with by a network element.

Alternatively, but less likely, said memory means may comprise one buffer for each member of the virtual concatenated group.

The above considerations relating to the period of time is not to be considered in a very strict sense but more in qualitative sense. In fact, as in relating to the described embodiment, the time period may be expressed in terms of bytes received or bytes written or bytes read.

As it is clear from the above described features, the method according to the invention is typically applicable to synchronous transmission systems such as SDH, SONET or OTN and to virtual concatenated groups including Virtual Containers of SDH, Virtual Tributaries of SONET or Optical channels Data Units of OTN.

The method according to the invention can be advantageously implemented on an hardware device of a network element of a telecommunication network; typically, the network element according to the invention is an element of an SDH network or a Sonet network or an OTN network. Referring to Fig.1, the method is carryed out at the reception side, that is on a device of network element 2.

The device can be an Application Specific Integrated Circuit (ASIC), a Field Programmable Gate Array (FPGA), an Electrically Programmable Logical Device (EPLD) or a microprocessor (external or embedded into an ASIC).

The memory means can be external or internal to the device.

The method according to the invention can be advantageously implemented through a software program like VHDL (Very high speed integrated circuit Hardware Description Language), mapped into an ASIC, FPGA or EPLD.

Alternatevely, the method according to the invention can be advantageously implemented through a software program (like C), running on a microprocessor.

The device according to the invention includes:
- receiving means adapted to receive information of the members of the virtual concatenated group and to store the received information into memory means;
- processing means adapted to read from the memory means the information of the members of the virtual concatenated group corresponding to the same time unit at the transmission side according to the order, after that a period of time has elapsed since the reception of the information of the most delayed member of the virtual concatenated group corresponding to the same time unit.

Preferably, the processing means are further adapted to control the period of time through an address difference between actual write address into the memory means of the information relating to the most delayed member and actual read address from the memory means of the information relating to the most delayed member.

Preferably, the processing means are further adapted to increase speed of the read from the memory means in case the address difference is greater than a defined value and to decrease the speed in case the address difference is smaller than the defined value.

Preferably, the processing means are further adapted to determine the most delayed member of the virtual concatenated group at the reception side.

## Claims

1. Method of time aligning members (VC-4) of a virtual concatenated group, the members (VC-4) being transmitted through a synchronous transmission system (3), a time unit being defined for the virtual concatenated group, the virtual concatenated group being associated to an order of distribution of information among the members (VC-4) in same time unit at a transmission side (1), the method **characterized by** comprising the steps to be carried out at a reception side (2) of:
A) receiving information of the members (VC-4) of the virtual concatenated group;
B) storing into memory means the received information;
C) reading from the memory means the information of the members of the virtual concatenated group corresponding to the same time unit at the transmission side (2) according to the order, after that a period of time has elapsed since the reception of the information of the most delayed member of the virtual concatenated group corresponding to the same time unit.

2. Method according to claim 1, wherein the period of time is controlled by an address difference between actual write address into the memory means of the information relating to the most delayed member and actual read address from the memory means of the information relating to the most delayed member.

3. Method according to claim 2, further including the steps of:
- in case the address difference is greater than a defined value, increasing speed of the read;
- in case the address difference is smaller than the defined value, decreasing the speed of the read.

4. Method according to claim 3, wherein the speed is controlled so that to maintain the period of time substantially constant.

5. Method according to any of claims 2 to 4, wherein the read can be temporarily stopped in case the actual read address is greater than the actual write address of the information relating to the most delayed member.

6. Method according to any of the previous claims, further including the step of determining the most delayed member of the virtual concatenated group at the reception side.

7. Method according to claim 6, wherein the determination of the most delayed member of the virtual concatenated group is carried out repeatedly or periodically.

8. Method according to any of the previous claims, wherein the synchronous transmission system is an SDH system or a SONET system or a OTN system and the members are Virtual Containers or Virtual Tributaries or Optical channels Data Units respectively.

9. Device for time aligning members (VC-4) of a virtual concatenated group, the members (VC-4) being transmitted through a synchronous transmission system (3), a time unit being defined for the virtual concatenated group, the virtual concatenated group being associated to an order of distribution of information among the members (VC-4) in same time unit at a transmission side (1), the device **characterized by** including:
- receiving means adapted to receive information of the members (VC-4) of the virtual concatenated group and to store the received information into memory means;
- processing means adapted to read from the memory means the information of the members of the virtual concatenated group corresponding to the same time unit at the transmission side (2) according to the order, alter that a period of time has elapsed since the reception of the information of the most delayed member of the virtual concatenated group corresponding to the same time unit.

10. Device according to claim 9, wherein the processing means are further adapted to control the period of time through an address difference between actual write address into the memory means of the information relating to the most delayed member and actual read address from the memory means of the information relating to the most delayed member.

11. Device according to claim 10, wherein the processing means are further adapted to increase speed of the read from the memory means in case the address difference is greater than a defined value and to decrease the speed in case the address difference is smaller than the defined value.

12. Device according to any of claims 9 to 11, wherein the processing means are further adapted to determine the most delayed member of the virtual concatenated group at the reception side.

## Patentansprüche

1. Verfahren zur Zeitanpassung von Mitgliedern (VC-4) einer virtuellen verketteten Gruppe, wobei die Mitglieder (VC-4) über ein synchrones Übertragungssystem (3) übertragen werden, wobei für die virtuelle verkettete Gruppe eine Zeiteinheit definiert wird, wobei die virtuelle verkettete Gruppe sendeseitig (1) einer Verteilungsordnung von Informationen unter den Mitgliedern (VC-4) in der selben Zeiteinheit zugeordnet ist, wobei das Verfahren **dadurch gekennzeichnet ist, dass** es die folgenden empfangsseitig (2) auszuführenden Schritte umfasst:
A) Empfangen von Informationen der Mitglieder (VC-4) der virtuellen verketteten Gruppe:
B) Speichern der empfangenen Informationen in einem Speichermittel;
C) Auslesen, aus dem Speichermittel, der Informationen der Mitglieder der virtuellen verketteten Gruppe, welche sendeseitig (2) der selben Zeiteinheit entsprechend der Ordnung angehören, nachdem ein Zeitraum seit dem Empfang der Informationen des Mitglieds der virtuellen verketteten Gruppe mit der größten Verzögerung, welche der selben Zeiteinheit entspricht, abgelaufen ist.

2. Verfahren nach Anspruch 1, wobei der Zeitraum anhand der Differenz zwischen der aktuellen Schreibadresse der Informationen, welche dem Mitglied mit der größten Verzögerung entsprechen, in das Speichermittel und der aktuellen Ausleseadresse der Informationen, welche dem Mitglied mit der größten Verzögerung entsprechen, aus dem Speichermittel gesteuert wird.

3. Verfahren nach Anspruch 2, weiterhin die folgenden Schritte umfassend:
- Wenn die Differenz zwischen den Adressen größer als ein definierter Wert ist, Erhöhen der Auslesegeschwindigkeit;
- Wenn die Differenz zwischen den Adressen kleiner als der definierte Wert ist, Verringern der Auslesegeschwindigkeit.

4. Verfahren nach Anspruch 3, wobei die Geschwindigkeit so geregelt wird, dass der Zeitraum wesentlich konstant gehalten wird.

5. Verfahren nach einem beliebigen der Ansprüche 2 bis 4, wobei das Auslesen vorübergehend unterbrochen werden kann, wenn die aktuelle Ausleseadresse größer als die aktuelle Schreibadresse der das Mitglied mit der größten Verzögerung betreffenden Informationen ist.

6. Verfahren nach einem beliebigen der vorstehenden Ansprüche, weiterhin den Schritt des Ermittelns des Mitglieds der virtuellen verketteten Gruppe mit der größten sendeseitigen Verzögerung umfassend.

7. Verfahren nach Anspruch 6, wobei das Ermitteln des Mitglieds der virtuellen verketteten Gruppe mit der größten Verzögerung wiederholt und periodisch durchgeführt wird.

8. Verfahren nach einem beliebigen der vorstehenden Ansprüche, wobei das synchrone Übertragungssystem ein SDH-System oder ein SONET-System oder ein OTN-Systems ist und die Mitglieder jeweils virtuelle Container oder virtuell Zubringer oder Dateneinheiten von optischen Kanälen sind.

9. Vorrichtung zur Zeitanpassung der Mitglieder (VC-4) einer virtuellen verketteten Gruppe, wobei die Mitglieder (VC-4) über ein synchrones Übertragungssystem (3) übertragen werden, wobei eine Zeiteinheit für die virtuelle verkettete Gruppe definiert ist, wobei die virtuelle verkettete Gruppe einer sendeseitigen (1) Verteilungsordnung von Informationen unter den Mitgliedern (VC-4) in der selben Zeiteinheit zugeordnet ist, wobei die Vorrichtung **dadurch gekennzeichnet ist, dass** sie umfasst:
- Empfangsmittel, welche geeignet sind, um Informationen von den Mitgliedern (VC-4) der virtuellen verketteten Gruppe zu empfangen und die empfangenen Informationen in Speichermitteln zu speichern;
- Bearbeitungsmittel, welche geeignet sind, um die Informationen der Mitglieder der virtuellen verketteten Gruppe, welche sendeseitig (2) der selben Zeiteinheit gemäß der Ordnung entspricht, aus dem Speichermittel auszulesen, nachdem ein Zeitraum seit dem Empfang der Informationen des Mitglieds der virtuellen verketteten Gruppe mit der größten Verzögerung, welche der selben Zeiteinheit entspricht, abgelaufen ist.

10. Vorrichtung nach Anspruch 9, wobei die Bearbeitungsmittel weiterhin geeignet sind, um den Zeitraum anhand einer Differenz zwischen der aktuellen Schreibadresse der Informationen, welche das Mitglied mit der größten Verzögerung betreffen, In das Speichermittel und der aktuellen Ausleseadresse der Informationen, welche das Mitglied mit der größten Verzögerung betreffen, aus dem Speichermittel zu steuern.

11. Vorrichtung nach Anspruch 10, wobei die Bearbeitungsmittel weiterhin geeignet sind, die Auslesegeschwindigkeit aus dem Speichermittel zu erhöhen, wenn die Differenz der Adressen größer als ein definierter Wert ist, und die Geschwindigkeit zu verringern, wenn die Differenz der Adressen kleiner als der definierte Wert ist.

12. Vorrichtung nach einem beliebigen der Ansprüche 9 bis 11, wobei die Bearbeltungsmittel weiterhin geeignet sind, um das Mitglied der virtuellen verketteten Gruppe mit der empfangseitig größten Verzögerung zu ermitteln.

## Revendications

1. Procédé de réglage de temporisation d'éléments (VC-4) d'un groupe virtuel concaténé, les éléments (VC-4) étant transmis par l'intermédiaire d'un système de transmission synchrone (3), une unité de temps étant définie pour le groupe virtuel concaténé, le groupe virtuel concaténé étant associé à un ordre de distribution d'information parmi les éléments (VC-4) dans la même unité de temps sur un côté d'émission (1), le procédé étant **caractérisé en ce qu'**il comprend les étapes suivantes à exécuter sur un côté de réception (2) :
A) réception de l'information des éléments (VC-4) du groupe virtuel concaténé ;
B) stockage de l'information reçue dans un moyen de stockage ;
C) lecture dans le moyen de stockage de l'information des éléments du groupe virtuel concaténé correspondant à la même unité de temps sur le côté d'émission (2) dans l'ordre, après qu'une période temporelle s'est écoulée depuis la réception de l'information de l'élément le plus retardé du groupe virtuel concaténé correspondant à la même unité de temps.

2. Procédé selon la revendication 1, dans lequel la période temporelle est contrôlée à l'aide d'une différence d'adresse entre l'adresse d'écriture réelle dans le moyen de stockage de l'information associée à l'élément le plus retardé et l'adresse de lecture réelle dans le moyen de stockage de l'information associée à l'élément le plus retardé.

3. Procédé selon la revendication 2, comprenant en outre les étapes suivantes :
- au cas où la différence d'adresse est supérieure à une valeur définie, augmentation de la vitesse de lecture ;
- au cas où la différence d'adresse est inférieure à la valeur définie, diminution de la vitesse de lecture.

4. Procédé selon la revendication 3, dans lequel la vitesse est contrôlée de façon à maintenir la période temporelle sensiblement constante.

5. Procédé selon l'une quelconque des revendications 2 à 4, dans lequel la lecture peut être cessée momentanément au cas où l'adresse de lecture réelle est supérieure à l'adresse d'écriture réelle de l'information associée à l'élément le plus retardé.

6. Procédé selon l'une quelconque des revendications précédentes, comprenant en outre l'étape de détermination de l'élément le plus retardé du groupe virtuel concaténé sur le côté de réception.

7. Procédé selon la revendication 6, dans lequel la détermination de l'élément le plus retardé du groupe virtuel concaténé est effectuée de façon répétée ou périodique.

8. Procédé selon l'une quelconque des revendications précédentes, dans lequel le système de transmission synchrone est un système SDH ou un système SONET ou un système OTN et les éléments sont des affluents virtuels ou des unités de données de voies de transmission optique, respectivement.

9. Dispositif de réglage de temporisation d'éléments (VC-4) d'un groupe virtuel concaténé, les éléments (VC-4) étant transmis par l'intermédiaire d'un système de transmission synchrone (3), une unité de temps étant définie pour le groupe virtuel concaténé, le groupe virtuel concaténé étant associé à un ordre de distribution d'information parmi les éléments (VC-4) dans la même unité de temps sur un côté d'émission (1), le dispositif étant **caractérisé en ce qu'**il comprend :
- des moyens de réception adaptés pour recevoir l'information des éléments (VC-4) du groupe virtuel concaténé et pour stocker l'information reçue dans un moyen de stockage ;
- des moyens de traitement adaptés pour lire dans le moyen de stockage l'information des éléments du groupe virtuel concaténé correspondant à la même unité de temps sur le côté d'émission (2) dans l'ordre, après qu'une période temporelle s'est écoulée depuis la réception de l'information de l'élément le plus retardé du groupe virtuel concaténé correspondant à la même unité de temps.

10. Dispositif selon la revendication 9, dans lequel les moyens de traitement sont en outre adaptés pour contrôler la période temporelle à l'aide d'une différence d'adresse entre l'adresse d'écriture réelle dans le moyen de stockage de l'information associée à l'élément le plus retardé et l'adresse de lecture réelle dans le moyen de stockage de l'information associée à l'élément le plus retardé.

11. Dispositif selon la revendication 10, dans lequel les moyens de traitement sont en outre adaptés pour augmenter la vitesse de lecture dans le moyen de stockage au cas où la différence d'adresse est supérieure à une valeur définie et pour diminuer la vitesse au cas où la différence d'adresse est inférieure à la valeur définie.

12. Dispositif selon l'une quelconque des revendications 9 à 11, dans lequel les moyens de traitement sont en outre adaptés pour déterminer l'élément le plus retardé du groupe virtuel concaténé sur le côté de réception.
